# EUROPÄISCHE PATENTANMELDUNG

(11) **EP 1 254 853 A2**
(43) Veröffentlichungstag der Anmeldung: **06.11.2002**
(21) Anmeldenummer: 02009703.6
(22) Anmeldetag: 29.04.2002
(51) Int. Cl.: B65G 37/00, B65G 7/02

(54) **Handhabungssystem**

(30) Priorität: 30.04.2001 DE 10121184
(71) Anmelder: Gämmerler AG, 82538 Geretsried-Gelting (DE)
(72) Erfinder: Gämmerler, Gunter, 82538 Gelting (DE); Meisel, Ronald, 82431 Kochel am See (DE); Schubart, Ralf Peter, 82431 Kochel am See (DE)
(74) Vertreter: Manitz, Finsterwald & Partner

(57) **Zusammenfassung**

Ein Handhabungssystem weist ein Entnahmemodul (E) und ein Abgabemodul (A) auf, die mit ihren Seiten unmittelbar aneinandergrenzen. Die Module weisen reibungsarme Transporttische (12,112,312) auf, um einen schonenden Transport von Produktstapeln (S) zu ermöglichen.

## Beschreibung

Die vorliegende Erfindung betrifft ein Handhabungssystem zum Fördern und Bearbeiten von insbesondere losen, d.h. nicht gebündelten, Stapeln von Druckereierzeugnissen. Das Handhabungssystem weist ein Entnahmemodul zum Entnehmen eines Stapels aus einer vorhergehenden Verarbeitungseinheit sowie ein Abgabemodul zur Übergabe des Stapels an eine Palettiereinheit auf. Hierbei ist das Handhabungssystem so gestaltet, daß die Module jeweils mit ihren quer zu einer Transportrichtung des Stapels verlaufenden Seiten unmittelbar aneinander angrenzen.

Derartige Handhabungssysteme sind aus dem Stand der Technik bekannt und werden im Rahmen der sogenannten Drucknachbearbeitung dazu verwendet, Stapel von Druckereierzeugnissen zu transportieren und von einer Entnahmestelle, beispielsweise der Stapelkammer eines Kreuzlegers, zu einer Abgabestelle, beispielsweise der Übernahmeposition eines Palettierroboters, zu transportieren.

Es ist die Aufgabe der vorliegenden Erfindung, ein Handhabungssystem der eingangs genannten Art zu schaffen, das bei kostengünstiger Herstellung und modularem Aufbau einen schonenden Transport der Druckereierzeugnisse ermöglicht.

Die Lösung dieser Aufgabe erfolgt durch die Merkmale des Anspruchs 1 und insbesondere dadurch, daß alle Module reibungsarme und stationär angeordnete Auflage- und Transporttische für einen Weitertransport des Stapels aufweisen, und daß für einen Transport des Stapels von dem Entnahmemodul zu dem Abgabemodul an zumindest einem Modul ein Schieber vorgesehen ist, der über die Außenabmessung des zugehörigen Modules hinaus in Transportrichtung bewegbar ist, um den Stapel vollständig auf ein benachbartes Modul zu schieben.

Erfindungsgemäß wird der Transport des Stapels von Druckereierzeugnissen nicht mit Hilfe von Transportriemen oder Förderbändern vorgenommen. Vielmehr wird der Stapel insgesamt mit Hilfe des vorgesehenen Schiebers über die reibungsarmen Auflage- und Transporttische weitergeschoben. Zu diesem Zweck ist der Schieber eines vorhergehenden Moduls jeweils über die Außenabmessung dieses Moduls hinaus in Transportrichtung bewegbar, so daß der Stapel von diesem Schieber auf den Auflage- und Transporttisch des benachbarten Moduls geschoben werden kann.

Mit dem erfindungsgemäßen Handhabungssystem lassen sich insbesondere lose Stapel von Druckereierzeugnissen auf schonende Weise transportieren, wobei aufgrund des modularen Aufbaus auf die jeweiligen Raumerfordernisse flexibel reagiert werden kann. Gleichzeitig kann ein solches Handhabungssystem kostengünstig hergestellt werden, da auf aufwendige Förderbänder bzw. Preßbänder, die synchronisiert sind, verzichtet werden kann.

Vorteilhafte Ausführungsformen der Erfindung sind in der Beschreibung, den Zeichnungen sowie den Unteransprüchen beschrieben.

Nach einer ersten vorteilhaften Ausführungsform kann in das Entnahmemodul des Handhabungssystems eine Preßeinrichtung integriert sein. Hierdurch ist es möglich, beim bzw. direkt unmittelbar nach dem Entnehmen des Stapels von Druckereierzeugnissen aus einer Übergabeposition den Stapel zu pressen, wodurch dessen Eigenstabilität erhöht wird. Vorteilhaft ist hierbei, daß dieses Pressen nicht in einer eigenen Preßstation erfolgt, sondern daß die Preßeinrichtung in das Entnahmemodul integriert ist, wodurch auf ein weiteres Preßmodul verzichtet werden kann.

Ferner ist es vorteilhaft, wenn die reibungsarmen Auflage- und Transporttische mit Luftdüsen versehen sind. Hierdurch wird die Reibung zum untersten Produkt minimiert und ein schonender Transport des Stapels erreicht, der über die Auflage- und Transporttische geschoben wird. Bevorzugt werden die Luftdüsen mit einem Seitenkanalverdichter mit Luft beaufschlagt. Mit einem solchen Seitenkanalverdichter können große Luftmengen bei niedrigem Druck bereitgestellt werden, so daß auf eine teuer aufzubereitende Druckluft verzichtet werden kann.

Nach einer weiteren vorteilhaften Ausführungsform der Erfindung ist zwischen dem Entnahmemodul und dem Abgabemodul zumindest ein Funktionsmodul vorgesehen, beispielsweise ein Umreifungsmodul oder eine Eckumlenkung. Durch ein Umreifungsmodul kann der lose Stapel von Druckereierzeugnissen mit einem Kunststoffband gebündelt werden, wodurch die Eigenstabilität des Stapels weiter erhöht werden kann. Durch eine Eckumlenkung kann die Transportrichtung des Stapels um 90° geändert werden, wodurch eine flexible Anpassung an die bei einer Druckerei jeweils vorhandene Maschinenkonfiguration möglich ist.

Nach einem weiteren Aspekt der vorliegenden Erfindung ist ein Entnahme- oder Abgabemodul für Stapel von Druckereierzeugnissen für das oben genannte Handhabungssystem vorgesehen, wobei das Modul ein horizontal zwischen einer vorderen Endposition und einer hinteren Endposition bewegbares Greifelement zur Entnahme eines Stapels aus einer vorhergehenden Verarbeitungseinheit oder zur Abgabe des Stapels an eine nachfolgende Verarbeitungseinheit aufweist. Ferner ist bei dem Entnahmeoder Abgabemodul eine um eine horizontale Schwenkachse schwenkbar gelagerte Auflage vorgesehen, die aus einer horizontalen Lage schräg nach unten kippbar ist.

Bei einem derartigen Entnahme- oder Abgabemodul kann der Stapel von Druckereierzeugnissen mit Hilfe des Greifelementes gegriffen und anschließend auf die Auflage gezogen werden. Da erfindungsgemäß die Auflage aus ihrer horizontalen Lage schräg nach unten kippbar ist, kann hierbei der Stapel schonend auf die schräggestellte Auflage gezogen werden, wodurch ein schonender Transport des Stapels möglich ist.

Bevorzugt weist das Greifelement gegeneinander anstellbare Greiffinger auf, wobei insbesondere ein unterer Teil des Greifelementes mindestens drei Greiffinger aufweisen kann. Bei einer solchen Ausführungsform ist sichergestellt, daß der Stapel von Druckereiprodukten sicher und schonend gegriffen werden kann, wobei bei einer Ausführungsform mit drei Greiffingern eine möglichst ebene Auflage des Stapels gewährleistet ist.

Bevorzugt ist ein Teil des Greifelementes bei horizontal gestellter Auflage unterhalb der Oberseite der Auflage positioniert. Hierdurch kann durch Kippen der Auflage in die Horizontale eine Übergabe des Stapels von dem Teil des Greifelementes auf die Auflage erfolgen, wobei diese Übergabe wiederum äußerst schonend für den Stapel von Druckereierzeugnissen erfolgt.

Nach einer weiteren vorteilhaften Ausführungsform können seitliche Führungen vorgesehen sein, um einen Stapel innerhalb des Modules zu führen, wobei sich die Führungen bevorzugt über die Außenabmessung des Modules hinaus erstrecken. Bei dieser Ausführungsform ist sichergestellt, daß der Stapel innerhalb eines Modules exakt geführt wird. Insbesondere kann hierdurch erreicht werden, daß der Stapel auch nach Übergabe auf ein nachfolgendes Modul die korrekte Orientierung beibehält.

Bevorzugt weist das Modul eine einzige Verstelleinrichtung auf, um gleichzeitig die seitlichen Führungen und eine Preßeinrichtung des Modules auf das Format eines Stapels einzustellen. Hierdurch sind die Rüst- bzw. Umstellzeiten minimiert, da für eine Formateinstellung nur eine einzige Umstellung an dem Modul vorgenommen werden muß.

Nach einer weiteren vorteilhaften Ausführungsform kann an dem Modul ein in den Transportweg des Stapels einfahrbarer Anschlag vorgesehen sein, der insbesondere vertikal und/oder horizontal verstellbar ist. Auf diese Weise kann ein angeförderter Produktstapel gegen den in den Transportweg des Stapels eingefahrenen Anschlag gefördert werden, so daß die Endposition des Stapels für einen Preßvorgang oder für ein Weiterreichen des Stapels genau festgelegt ist. Ferner ist es vorteilhaft, an dem Modul einen auf den Stapel absenkbaren Niederhalter vorzusehen, um den Stapel in seiner Position zu stabilisieren.

Nach einem weiteren Aspekt der Erfindung ist ein Funktionsmodul für Stapel von Druckereierzeugnissen vorgesehen, das in dem oben beschriebenen Handhabungssystem Anwendung finden kann. Ein derartiges Funktionsmodul weist eine reibungsarme Auflage zum Transport eines Stapels und einen Längsschieber zum Verschieben des Stapels auf der Auflage auf. Im Falle einer Eckumlenkung ist die Auflage so ausgebildet, daß der Stapel auf dieser transportiert und um 90° umgelenkt werden kann, wobei in diesem Fall ein Längsschieber und ein Querschieber zum Verschieben des Stapels auf der Auflage vorgesehen ist.

Bevorzugt ist auch hier zumindest ein Schieber über die Außenabmessung des Modules hinaus horizontal bewegbar, um einen Stapel auf ein nachfolgendes Modul oder von einem vorhergehenden Modul zu schieben. Eine konstruktive Erleichterung kann dadurch erzielt werden, daß der Schieber auch vertikal bewegbar ist, so daß dieser von oben in den Transportweg des Stapels einfahrbar ist.

Bei einem Eckumlenkungsmodul ist es vorteilhaft, wenn zumindest zwei seitliche Führungen vorgesehen sind, die rechtwinklig aneinandergrenzen und die jeweils teleskopierbar ausgebildet sind, um eine kontinuierliche Führung im Bereich einer Innenecke auch bei verschiedenen Formaten des Stapels zu gewährleisten. Bevorzugt ist hierbei eine einzige Verstelleinrichtung vorgesehen, um gleichzeitig alle seitlichen Führungen des Moduls auf das gewünschte Format eines Stapels einzustellen.

Verfahrensmäßige Aspekte der Erfindung sind in den Verfahrensansprüchen beschrieben.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine Seitenansicht eines Entnahmemoduls;
- Fig. 2: eine Seitenansicht eines Abgabemoduls;
- Fig. 3: eine Vorderansicht des Abgabemoduls von Fig. 2;
- Fig. 4: eine Draufsicht auf ein Eckumsetzmodul;
- Fig. 5: eine Seitenansicht des Eckumsetzmoduls von Fig. 4 aus Richtung V in Fig. 4;
- Fig. 6: eine Vorderansicht des Eckumsetzmoduls von Fig. 4 und Fig. 5 aus Richtung VI in Fig. 4; und
- Fig. 7: eine schematische Draufsicht auf ein Handhabungssystem.

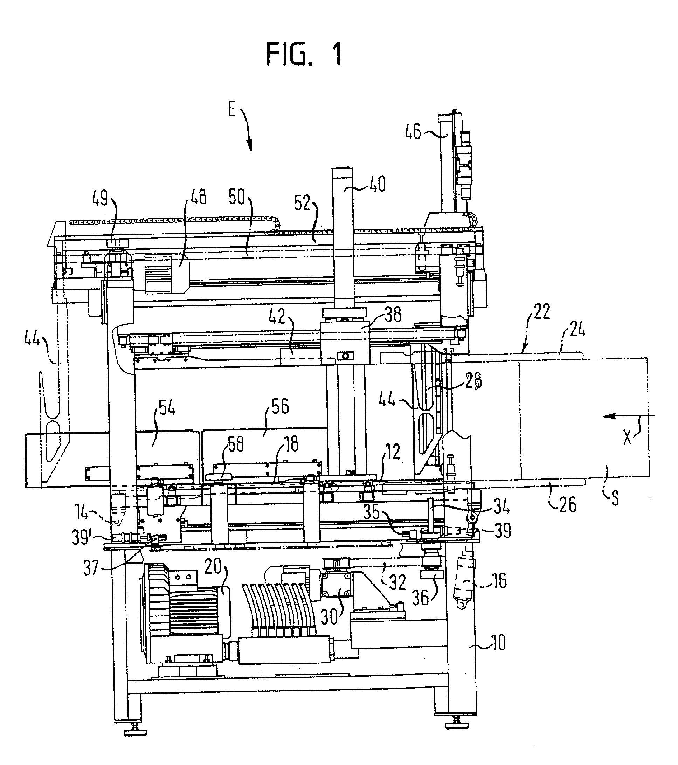

Das in Fig. 1 dargestellte Entnahmemodul E weist ein Grundgestell 10 auf, auf dem ein Auflage- und Transporttisch 12 schwenkbar montiert ist. Der Auflage- und Transporttisch 12 kann aus der in Fig. 1 dargestellten Lage um ein Schwenklager 14 geschwenkt und dabei aus der dargestellten horizontalen Position in eine schräg nach unten gekippte Position verschwenkt werden, was mit Hilfe eines Pneumatikzylinders 16 erfolgt. In der verschwenkten Position bildet der Auflage- und Transporttisch 12 mit der Horizontalen einen Winkel von etwa 10°.

Der Auflage- und Transporttisch 12 ist mit einer Vielzahl von Luftdüsen 18 versehen, die eine Reibung zum untersten Produkt eines Stapels S minimieren und einen schonenden Transport des Stapels über den Auflageund Transporttisch gewährleisten. Die Luftdüsen werden von einem Seitenkanalverdichter 20 mit Luft beaufschlagt.

Zum Greifen eines Stapels von Druckereierzeugnissen, wie er beispielsweise in einer Stapelkammer eines Kreuzlegers gebildet werden kann, ist an dem Entnahmemodul ein Greifelement 22 vorgesehen, das zwei obere Greiffinger 24 sowie zwei untere Greiffinger 26 aufweist, die gegeneinander anstellbar sind. Im vorliegenden Ausführungsbeispiel sind die oberen Greiffinger 24 mit pneumatischen Linearzylindern 28 gegen die in vertikaler Richtung stationären Greiffinger 26 angestellt.

Für eine horizontale Förderbewegung des Greifelementes 22 ist ein Motor 30 vorgesehen, der die Greiffinger 26 über einen Zahnriementrieb 32 antreibt. Für den synchronen Antrieb der oberen Greiffinger 24 ist ein weiterer Zahnriementrieb (nicht dargestellt) vorgesehen, der auf einer von dem ersten Zahnriementrieb 32 angetriebenen, vertikal verlaufenden Keilwelle 34 verschiebbar gelagert ist, so daß der Hubbewegung der Greiffinger gefolgt werden kann.

Für die horizontale Bewegung des Greifelementes 22 ist ein Frequenzumrichter vorgesehen, der definierte Beschleunigungs- und Bremsrampen vorsieht, die über einen angeflanschten Rotationsimpulsgeber 36 gesteuert werden. Die vordere und die hintere Endlage der Greiffinger 24, 26 sind durch Initiatoren 35, 37 festgelegt, wobei die jeweiligen Endpositionen der Greiffinger durch Stoßdämpfer 39, 39' abgedämpft sind.

Beim Zurückziehen des Stapels S aus der in Fig. 1 dargestellten Position treten die unteren Greiffinger 26 durch Aussparungen hindurch, die in dem Auflage- und Transporttisch 12 vorgesehen sind, so daß der Stapel S auf den schräg nach unten gekippten Auflage- und Transporttisch 12 gezogen werden kann. Das Zurückziehen des Greifelementes 22 mit Hilfe des Motors 30 erfolgt dabei so weit, bis der Stapel S unterhalb einer Preßeinheit 38 zu liegen kommt, die gemeinsam mit dem Auflage- und Transporttisch auf einem Rahmen montiert ist. Die Preßeinheit 38 weist zwei vertikal angeordnete Pneumatikzylinder 40 auf, an deren unteren Ende jeweils eine Preßplatte 42 vorgesehen ist.

Wie Fig. 1 verdeutlicht, liegen die Oberkanten der unteren Greiffinger 26 etwas unterhalb der Oberkante des Auflage- und Transporttisches 12, wenn sich dieser in seiner horizontalen Lage befindet. Hierdurch ist es möglich, durch Hochkippen des Auflage- und Transporttisches 12 den Stapel S von den unteren Greiffingern 26 auf den Auflage- und Transporttisch 12 zu übergeben, wenn dabei gleichzeitig die Linearzylinder 28 entspannt werden. Durch Betätigen der Pneumatikzylinder 40 können die Preßplatten 42 auf den Stapel S abgesenkt werden.

Für einen Weitertransport des gepreßten Stapels S durch das Entnahmemodul hindurch und auf ein nachfolgendes Modul ist ein Schieber 44 vorgesehen, der von einem pneumatischen Linearzylinder 46 in den Transportweg des Stapels vertikal eingefahren werden kann. Der Schieber 44 erstreckt sich über die gesamte Höhe des Stapels S und kann in horizontaler Richtung von einem Motor 48 über einen Zahnriemen 50 entlang einer Horizontalführung 52 verfahren werden. Wie Fig. 1 verdeutlicht, erstreckt sich die Horizontalführung 52 über die Außenabmessung des Entnahmemoduls hinaus, so daß der Schieber 44 bis über das Grundgestell 10 hinaus bewegt werden kann, was durch eine gestrichelte Position des Schiebers 44 dargestellt ist.

Um den Stapel während des Transportes mit Hilfe des Schiebers 44 zu führen, sind Führungsplatten 54, 56 vorgesehen, die sich zu beiden Seiten des Stapels S erstrecken. Auch hier zeigt Fig. 1, daß sich die Führungsplatten 54 über die Außenabmessungen des Entnahmemoduls hinaus und über den vorderen Endpunkt des Schiebers 44 hinaus erstrecken. Für eine Formateinstellung auf eine gewünschte Stapelgröße können sowohl die Führungsplatten 54, 56 wie auch die Preßeinheit 38 mit Hilfe einer einzigen Handkurbel 58 auf die entsprechende Formatbreite eingestellt werden.

Auf den Motor 48 ist ein Rotationsimpulsgeber 49 aufgeflanscht, der zum Positionieren des Stapels im nachfolgenden Modul dient. Die jeweilige Position richtet sich nach dem Format der Druckereiprodukte, das an einem Steuercomputer, bevorzugt dem Steuercomputer eines Palettierroboters eingegeben und an den Impulsgeber 49 übermittelt wird.

Nachfolgend wird die Funktionsweise des vorstehend beschriebenen Entnahmemoduls erläutert.

Zur Entnahme eines Stapels S aus einer vorhergehenden Verarbeitungseinheit, beispielsweise aus der Stapelkammer eines Kreuzlegers, werden zunächst die Greiffinger 24, 26 mit Hilfe des Motors 30 in die Stapelkammer eingefahren, wobei sich die unteren Greiffinger 26 unterhalb und die oberen Greiffinger 24 oberhalb des Stapels befinden. Bei Erreichen der vorderen Endposition der Greiffinger 24, 26 wird die Bewegung durch den Stoßdämpfer 39 abgedämpft und das Erreichen der Endlage wird durch den Initiator 35 signalisiert. Nach dem Erreichen der vorderen Endlage werden die oberen Greiffinger 24 mit Hilfe des Linearzylinders 28 auf den Stapel S bzw. in Richtung der darunterliegenden Greiffinger 26 abgesenkt, wodurch der Stapel S zwischen den oberen und den unteren Greiffingern 24 und 26 eingeklemmt wird. Die Greiffinger 24 und 26 fahren anschließend mit einer definierten Beschleunigungsrampe aus der Stapelkammer des Kreuzlegers heraus und nehmen dabei den geklemmten Stapel S mit. Beim Herausziehen des Stapels S wird dieser auf den nach unten gekippten Auflage- und Transporttisch 12 gezogen, bis der Stapel S bei Erreichen der hinteren Endlage, die durch den Initiator 37 angezeigt wird, unterhalb der Preßeinheit 38 zu liegen kommt. Der Auflage- und Transporttisch 12 wird anschließend mit Hilfe des Pneumatikzylinders 16 um die horizontale Schwenkachse des Schwenklagers 14 in die Horizontale verschwenkt (Fig. 1). Anschließend kann der Stapel S mit Hilfe der beiden Pneumatikzylinder 40 gepreßt werden.

Nach dem Pressen wird der Stapel S mit Hilfe des Schiebers 44 in ein nachfolgendes Modul weitertransportiert, das sich in Förderrichtung X gesehen in Fig. 1 links von dem dargestellten Entnahmemodul befindet. Der Transport erfolgt hierbei mit Hilfe des Motors 48 über den Zahnriemen 50.

Bevor diese Transportbewegung beginnen kann, wird der Schieber 44 aus seiner oberen (in Fig. 1 nicht dargestellten ) Position oberhalb des Stapels S mit Hilfe des Linearzylinders 46 in die in Fig. 1 dargestellte Position abgesenkt. Beim Weitertransport des Stapels in Transportrichtung X wird dieser über den mit Luftdüsen 18 versehenen Auflage- und Transporttisch 12 horizontal verschoben und zwar so weit, bis sich der Schieber 44 in der in Fig. 1 gestrichelt dargestellten Position befindet, in der dieser über die Außenabmessungen des Entnahmemoduls hinausragt. Bei dieser Transportbewegung wird der Stapel S von den Führungsplatten 54, 56 geführt, die sich noch über den Verschiebeweg des Schiebers 44 in das benachbarte Modul hinein erstrecken.

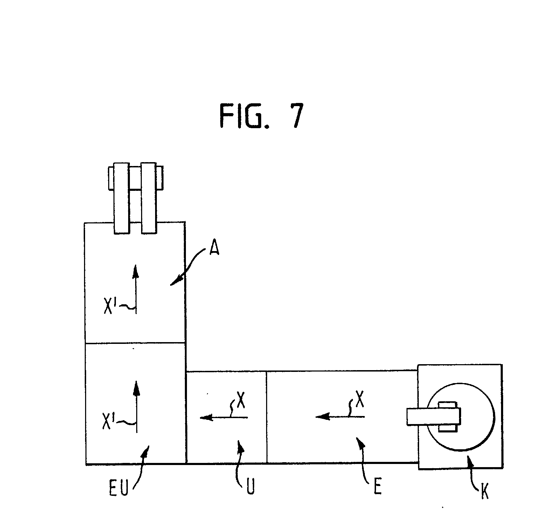

Als benachbartes Modul kann neben dem vorstehend beschriebenen Entnahmemodul ein Umreifungsmodul U vorgesehen werden (vgl. Fig. 7), in dem die einzelnen Stapel S mit einem Kunststoffband umreift werden. Derartige Umreifungsmodule sind aus dem Stand der Technik bekannt. Falls keine Umreifungsfunktion gewünscht wird, können die Stapel ohne weitere Bearbeitung lose durch das Umreifungsmodul transportiert werden. Wichtig ist hierbei lediglich, daß der Auflage- und Transporttisch des Umreifungsmoduls ebenfalls reibungsarm ausgebildet ist.

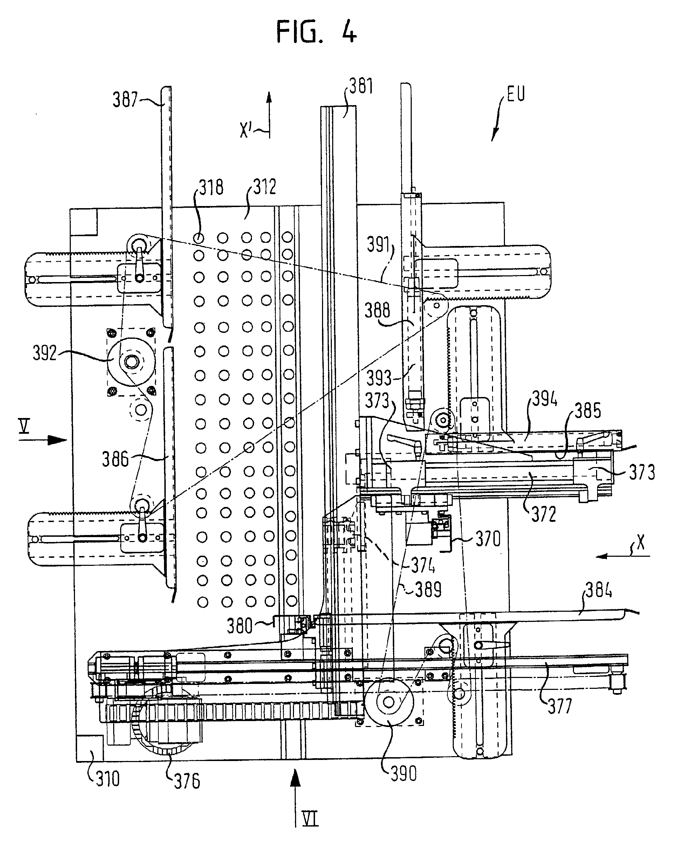

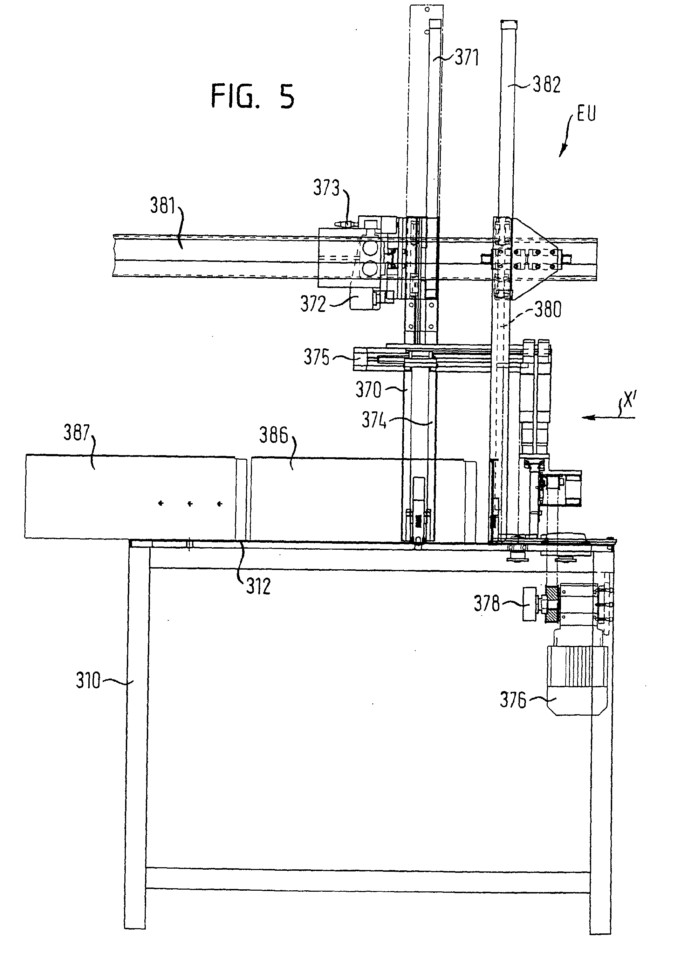

An das Umreifungsmodul U kann sich ein Eckumsetzmodul EU anschließen, wie es in den Fig. 4 bis 6 dargestellt ist.

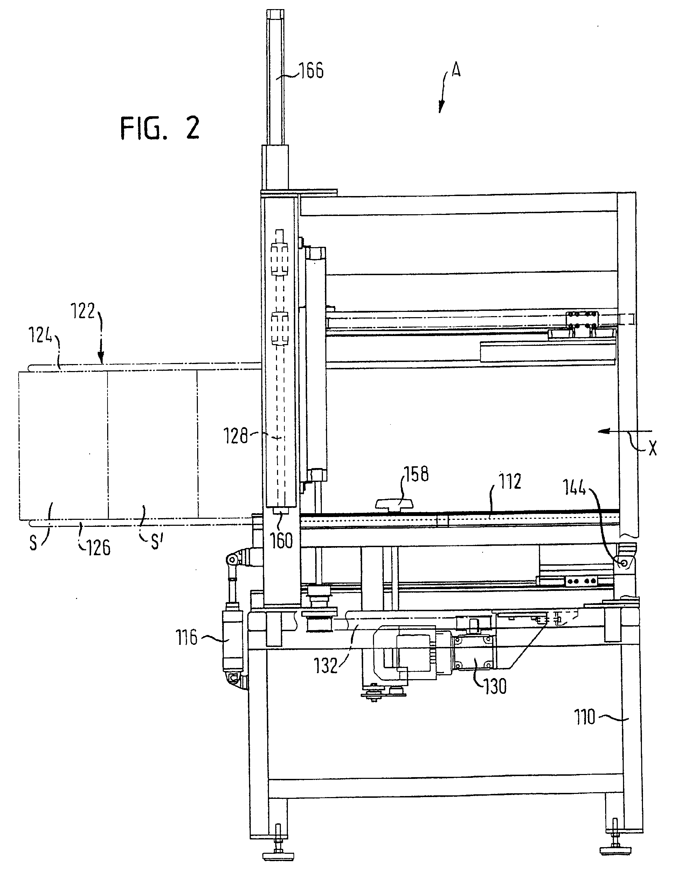

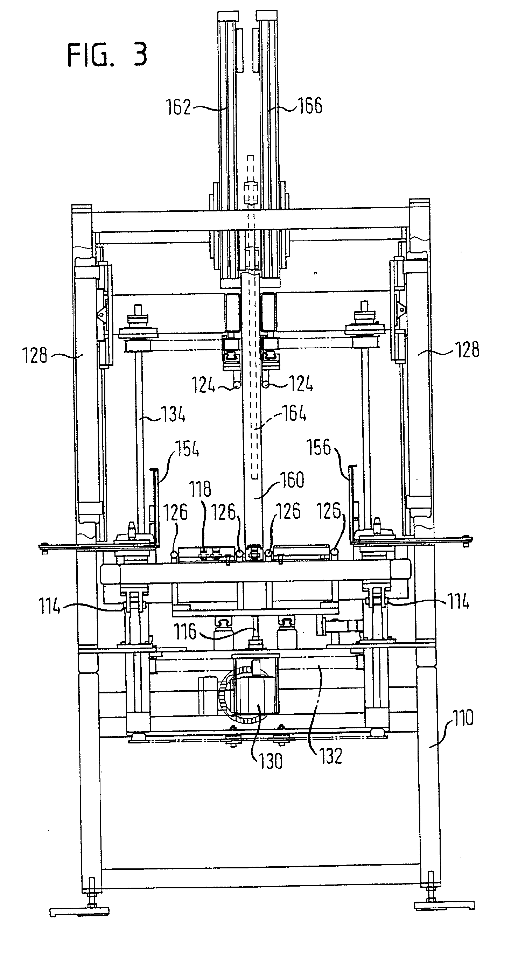

Zur Abgabe des Stapels aus dem erfindungsgemäßen Handhabungssystem an eine nachfolgende Einheit, beispielsweise einen Palettierroboter, dient ein in den Fig. 2 und 3 dargestelltes Abgabemodul A. Dieses ist grundsätzlich ähnlich wie das vorstehend beschriebene Entnahmemodul E ausgebildet. Aus diesem Grund sind gleiche Teile mit gleichen Bezugszeichen versehen, die jeweils um den Wert 100 erhöht sind.

Wie die Fig. 2 und 3 zeigen, weist das erfindungsgemäße Abgabemodul A ein Grundgestell 110 auf, auf dem ein Auflage- und Transporttisch 112 schwenkbar um ein Gelenklager 114 so gelagert ist, daß er mit Hilfe eines Pneumatikzylinders 116 aus der dargestellten horizontalen Lage in eine schräg nach unten gekippte Lage verschwenkt werden kann. Der Auflageund Transporttisch 112 ist wiederum mit Luftdüsen 118 versehen, die von einem (nicht dargestellten) Seitenkanalverdichter mit Luft beaufschlagt werden. Zur Abgabe eines Stapels S aus dem Abgabemodul ist ein Greifelement 122 vorgesehen, das zwei obere Greiffinger 124 und vier untere Greiffinger 126 aufweist, wobei die oberen Greiffinger 124 mit Hilfe von Linearzylindern 128 vertikal gegen die unteren Greiffinger 126 angestellt werden können. Eine Horizontalbewegung des Greifelementes 122 erfolgt mit Hilfe eines Motors 130, der über einen Zahnriementrieb 132 die Greiffinger 124, 126 horizontal verfährt. Die Kraftübertragung zu den oberen Greiffingern 124 erfolgt wiederum über eine Keilwelle 134 (Fig. 3), um zu gewährleisten, daß die oberen und die unteren Greiffinger 124, 126 synchrone Bewegungen mit gleicher Geschwindigkeit und gleichen Bremsrampen ausführen. Der Zahnriemenantrieb der oberen Greiffinger 124 ist dabei auf der Keilwelle 134 verschiebbar gelagert, so daß der Hubbewegung der Greiffinger gefolgt werden kann. Die vordere und die hintere Endlage der Greiffinger sind wiederum durch Initiatoren festgelegt und werden durch Stoßdämpfer abgesichert.

Das Heranfördern eines Stapels S (oder wie in Fig. 2 dargestellt zweier Teilstapel S und S'), erfolgt mit Hilfe eines Schiebers eines vorangehenden Moduls des Handhabungssystems. Um dabei eine definierte Endposition des in das Abgabemodul hineingeschobenen Stapels zu gewährleisten, ist ein sich vertikal über die Höhe des Stapels S erstreckender Anschlag 160 vorgesehen, der mit Hilfe eines Linearzylinders 162 vertikal angehoben und abgesenkt werden kann.

Sofern ein Betrieb mit Teilstapeln gewünscht ist, die zusammen einen Gesamtstapel bilden (vgl. Fig. 2), kann mit Hilfe eines an dem Abgabemodul vorgesehenen Niederhalters 164 (Fig. 3) ein bereits angelieferter Teilstapel niedergehalten werden, wobei ein Anheben und Absenken des Niederhalters 164 durch einen Linearzylinder 166 erfolgt.

Nachfolgend wird die Funktionsweise des Abgabemoduls A beschrieben, d.h. die Abgabe eines gebildeten Stapels an eine Nachfolgeeinheit oder das Bilden eines aus zwei Teilstapeln bestehenden Gesamtstapels und die Abgabe desselben an die nachfolgende Einheit.

Ein Stapel (oder ein Teilstapel) wird von einem vorangehenden Modul mit Hilfe eines Schiebers auf den Auflage- und Transporttisch 112 des Abgabemoduls geschoben, während dieser sich in seiner horizontalen Lage befindet. Nachdem der Stapel S bzw. Teilstapel S' den in seine untere vertikale Position abgesenkten Anschlag 160 erreicht hat, wird der Auflageund Transporttisch 112 mit Hilfe des Pneumatikzylinders 116 um das Schwenklager 114 nach unten verschwenkt. Vorher haben sich die Oberkanten der unteren Greiffinger 126 unterhalb der Oberfläche des Auflageund Transporttisches 112 befunden (Fig. 3), so daß bei dem Transport des Stapels auf dem Auflage- und Transporttisch 112 keine Markierungen auf dem untersten Produkt hinterlassen werden. Nach dem Absenken des Auflage- und Transporttisches 112 befindet sich der Stapel auf den unteren Greiffingern 126 und kann zwischen den oberen und den unteren Greiffingern 124 und 126 durch Betätigen der Linearzylinder 128 geklemmt werden. Der Anschlag 160 wird anschließend mit Hilfe des Linearzylinders 162 nach oben weggefahren und die Transportfinger 124 und 126 fahren mit definierten Beschleunigungs- und Bremsrampen nach vorne und transportieren dabei den Stapel in die Übergabeposition, in welcher der Stapel beispielsweise mit Hilfe eines Palettierroboters entnommen werden kann. In dieser vorderen Endlage kann ein Palettierroboter in die Übergabeposition fahren und den Stapel mit Hilfe eines Greifers übernehmen, woraufhin die Greiffinger wieder in ihre Ausgangsstellung zurückfahren können.

Bevorzugt können die Greiffinger 124 und 126 mit Flachriemen überspannt werden, welche sich beim Zurückziehen unter dem Stapel abrollen, um jegliche Markierungen an den untersten Produkten zu vermeiden.

Um in dem Abgabemodul aus zwei Teilstapeln einen Gesamtstapel zu bilden, wird der erste Teilstapel mit Hilfe eines Schiebers des vorangehenden Moduls bis auf den abgeschlenkten Anschlag 160 herangeschoben. Anschließend wird mit Hilfe des Linearzylinders 166 der Niederhalter 164 auf den ersten Teilstapel abgesenkt. Anschließend kann ein zweiter Teilstapel S' bis an den ersten, von dem Niederhalter 164 fixierten Teilstapel herangefördert werden, wobei die genaue Positionierung mit Hilfe eines Rotationsimpulsgebers gesteuert wird. Anschließend können auf übliche Weise die oberen Greiffinger 126 auf die beiden Teilstapel abgesenkt werden, so daß diese beiden Teilstapel als ein Gesamtstapel an die nachfolgende Palettiereinrichtung abgegeben werden können.

Wie Fig. 3 zeigt, sind bei dem dargestellten Ausführungsbeispiel zwei obere Greiffinger 124 und vier untere Greiffinger 126 vorgesehen, was dazu dient, daß die untersten Produkte des Stapels nicht seitlich herunterhängen. Die beiden äußeren, unteren Greifelemente 126 können manuell auf die gewünschte Formatgröße eingestellt werden. Die entstehenden Lücken in dem Auflage- und Transporttisch können durch Wechselplatten abgedeckt werden.

Für eine seitliche Führung der Stapel sind seitliche Führungsplatten 154, 156 vorgesehen. Diese können mit Hilfe der Handkurbel 158 auf das gewünschte Format eingestellt werden.

Das in den Fig. 4 bis 6 dargestellte Eckumsetzmodul EU kann beispielsweise zwischen einem Umreifungsmodul U und einem Abgabemodul A eingesetzt sein und es dient dazu, die Transportrichtung eines Stapels um 90° zu ändern, ohne daß dabei der Stapel gedreht wird.

Wie die Fig. 4 bis 6 zeigen, weist das Eckumsetzmodul EU ein Grundgestell 310 auf, auf dem ein horizontaler Auflage- und Transporttisch 312 vorgesehen ist, der für einen reibungsarmen Weitertransport des Stapels an seiner Oberfläche Luftdüsen 318 aufweist. Das Eckumsetzmodul weist zwei Schieber auf, um einen Stapel in einer ersten Förderrichtung X und in einer dazu um 90° geschwenkten Förderrichtung X' zu verschieben. Ferner ist ein verschiebbarer Anschlag vorgesehen, um dem Stapel in einem vorangehenden Modul eine definierte Endposition zu geben.

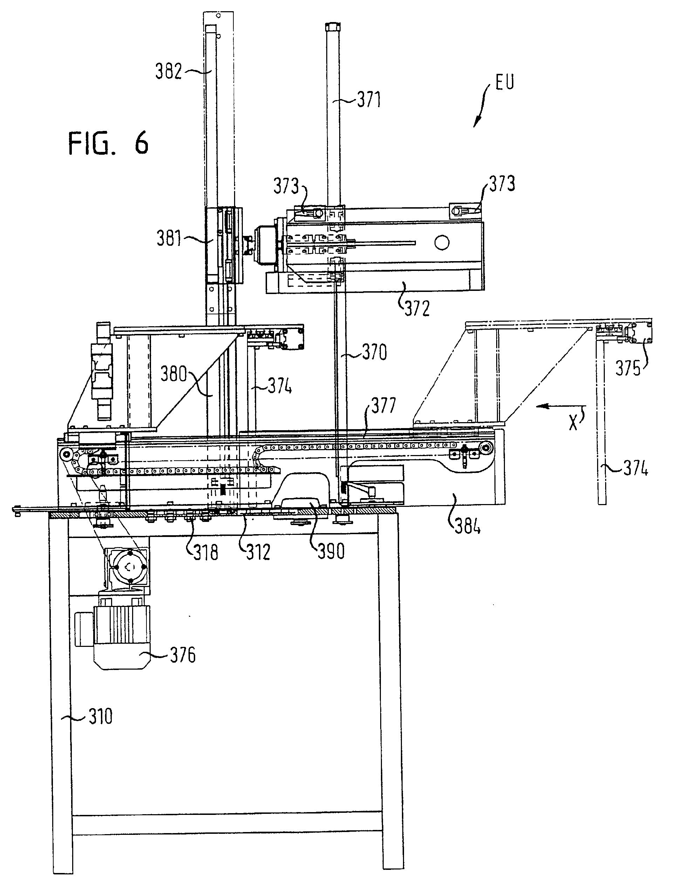

Das Bezugszeichen 370 bezeichnet einen Anschlag, der mit Hilfe eines Linearzylinders 371 in vertikaler Richtung in den Förderweg X eines Stapels eingebracht werden kann. Um zwei voneinander unabhängige Endpositionen in Transportrichtung X vorzugeben, ist der Anschlag 370 mit Hilfe eines horizontal verstellbaren Linearzylinders 372 in Richtung X verschiebbar. Zum Einstellen einer vorderen und hinteren Endposition dienen manuell verstellbare Endanschläge 373 (vgl. Fig. 4 und 6).

Für einen Weitertransport des Stapels in Transportrichtung X ist ein Schieber 374 vorgesehen, der mit Hilfe eines Linearzylinders 375 in Transportrichtung X' und mit Hilfe eines Motors 376 entlang einer Führung 377 in Transportrichtung X verfahren werden kann. In Fig. 6 ist die vordere Endposition des Schiebers 374 gestrichelt und die hintere Endposition mit durchgezogenen Linien dargestellt. Wie gut zu erkennen ist, steht der Schieber 374 in seiner vorderen Endposition weit über die Außenkontur des Eckumsetzmodules hinaus, so daß ein sich auf einem vorhergehenden Modul befindlicher Stapel S von diesem Modul abgeholt werden kann, indem der Schieber 374 mit Hilfe des Motors 376 hinter die nachlaufende Kante des Stapels verfahren und anschließend mit Hilfe des Linearzylinders 375 quer zur Transportrichtung X bewegt wird, so daß der Stapel durch eine anschließende Rückzugsbewegung des Motors 376 auf das Eckumsetzmodul geschoben werden kann. Der Stapel wird anschließend so weit geschoben, bis er mittig zur Auslaufrichtung X' positioniert ist, was über einen angeflanschten Rotationsimpulsgeber 378 gesteuert wird. Der hierfür erforderliche Sollwert wird an einem Steuercomputer eingegeben und an den Impulsgeber übermittelt.

Der Weitertransport zu dem nachfolgenden Abgabemodul wird mit Hilfe eines Querschiebers 380 vorgenommen, der entlang einer horizontalen Führung 381 in Richtung X' bewegt werden kann. Wie Fig. 4 zeigt, erstreckt sich die Führung 381 über die Außenkontur des Umsetzmodules hinaus, so daß ein Stapel auf ein nachfolgendes Modul hinaufgeschoben werden kann.

Um eine besonders hohe Taktgeschwindigkeit zu erzielen, ist der Querschieber 380 mit Hilfe eines Linearzylinders 382 vertikal verschiebbar, so daß ein Rückziehen des Querschiebers 380 erfolgen kann, auch wenn bereits ein nachfolgender Stapel von dem Schieber 374 in die Bewegungsbahn des Querschiebers 380 eingebracht worden ist.

Auch bei dieser Ausführungsform werden die Luftdüsen 318 mit einem nicht dargestellten Seitenkanalverdichter mit Luft beaufschlagt. Zur seitlichen Führung sind Führungsplatten 384, 385, 386, 387 und 388 vorgesehen. Die Führungsplatten 384 und 385 sind über einen Seilzug 389 von einer Handkurbel 390 in ihrer Relativposition einstellbar. Ebenso können die Führungsplatten 386, 387 und 388 über einen Seilzug 391 für eine Formatverstellung von einer Handkurbel 392 in ihrer Relativposition zueinander eingestellt werden.

Die beiden inneren Führungsplatten 385 und 388 sind in Richtung X bzw. Richtung X' über Linearzylinder 393 und 394 seitlich teleskopierbar, so daß der jeweilige Stapel auch im innenliegenden Umlenkpunkt stets seitlich geführt ist.

Nachfolgend wird die Funktionsweise des vorstehend beschriebenen Ekkumsetzmodules erläutert.

Zunächst wird der Anschlag 370 mit Hilfe des Linearzylinders 372 in die gewünschte Position gefahren, so daß ein von einem vorlaufenden Bearbeitungsmodul angeförderter Stapel an der Position des Anschlags gestoppt wird. Handelt es sich bei dem vorlaufenden Modul um ein Umreifungsmodul, ist der Stapel in dieser Position allseitig geführt und kann ohne Verrutschen umreift werden.

Nach dem Umreifen fährt der Schieber 374 in die in Fig. 6 gestrichelt dargestellte Position und wird anschließend mit Hilfe des Linearzylinders 375 hinter den Stapel gefahren, so daß bei einer Rückzugsbewegung mit Hilfe des Motors 376 der Stapel auf den Auflage- und Transporttisch 312 des Eckumsetzmodules geschoben werden kann, nachdem der Anschlag 370 mit Hilfe des Linearzylinders 371 vertikal nach oben bewegt worden ist, so daß der Stapel unter dem Anschlag 370 durchgeschoben werden kann.

Von dem Schieber 374 wird der Stapel anschließend so weit geschoben, bis er mittig zur Auslaufrichtung X' positioniert ist. Anschließend wird der Stapel mit Hilfe des Querschiebers 380 in Förderrichtung X' über den Auflage- und Transporttisch 312 auf das benachbarte Modul geschoben. Gleichzeitig kann bereits ein nachfolgender Stapel in Förderrichtung X angefördert werden. Bei einer Rückzugsbewegung des Querschiebers 380 wird dieser zunächst mit Hilfe des Linearzylinders 382 vertikal angehoben, so daß dieser über dem nachfolgenden Stapel zurückgeführt werden kann.

Fig. 7 zeigt schematisch eine Anordnung einzelner erfindungsgemäßer Module zu einem Handhabungssystem. Wie zu erkennen ist, dient ein Entnahmemodul E zum Entnehmen eines Stapels aus einer vorhergehenden Verarbeitungseinheit, beispielsweise einem Kreuzleger K. Anschließend ist ein Umreifungsmodul U vorgesehen, an das sich ein Eckumsetzmodul EU anschließt. Im Anschluß an das Eckumsetzmodul EU ist ein Abgabemodul A vorgesehen, das einen Stapel an eine nachfolgende Einheit, beispielsweise einen Palettierroboter abgeben kann.

Wie Fig. 7 zeigt, sind alle Module mit ihrem jeweils quer zur Transportrichtung X bzw. X' verlaufenden Seiten unmittelbar aneinander angrenzend angeordnet, so daß die einzelnen Stapel von einem Modul auf das nächste Modul geschoben werden können.

### Bezugszeichenliste

- 10: Grundgestell
- 12: Auflage- und Transporttisch
- 14: Schwenklager
- 16: Pneumatikzylinder
- 18: Luftdüsen
- 20: Seitenkanalverdichter
- 22: Greifelement
- 24, 26: Greiffinger
- 28: Linearzylinder
- 30: Motor
- 32: Zahnriementrieb
- 34: Keilwelle
- 35: Initiator
- 36: Impulsgeber
- 37: Initiator.
- 38: Preßeinheit
- 39, 39': Stoßdämpfer
- 40: Zylinder
- 42: Preßplatte
- 44: Schieber
- 46: Linearzylinder
- 48: Motor
- 49: Impulsgeber
- 50: Zahnriemen
- 52: Horizontalführung
- 54, 56: Führungsplatten
- 58: Handrand

- 110: Grundgestell
- 112: Auflage- und Transporttisch
- 114: Schwenklager
- 116: Pneumatikzylinder
- 118: Luftdüsen
- 122: Greifelement
- 124, 126: Greiffinger
- 128: Linearzylinder
- 130: Motor
- 132: Zahnriementrieb
- 134: Keilwelle
- 154, 155: Führungsplatte
- 158: Handkurbel
- 160: Anschlag
- 162: Linearzylinder
- 164: Niederhalter
- 166: Linearzylinder

- 310: Grundgestell
- 312: Auflage- und Transporttisch
- 318: Luftdüsen
- 370: Anschlag
- 371, 372: Linearzylinder
- 373: Endanschlag
- 374: Schieber
- 375: Linearzylinder
- 376: Motor
- 377: Führung
- 378: Impulsgeber
- 380: Querschieber
- 381: Führung
- 382: Linearzylinder
- 384 - 388: Führungsplatten
- 389: Seilzug
- 390: Handkurbel
- 391: Seilzug
- 392: Handkurbel
- 393, 394: Linearzylinder

- A: Abgabemodul
- E: Entnahmemodul
- EU: Eckumsetzmodul
- K: Kreuzleger
- S: Stapel
- S': Teilstapel
- X, X': Transportrichtung

## Patentansprüche

1. Handhabungssystem zum Fördern und Bearbeiten von insbesondere losen Stapeln von Druckereierzeugnissen, mit
- einem Entnahmemodul (E) zum Entnehmen eines Stapels (S) aus einer vorhergehenden Verarbeitungseinheit (K), und
- einem Abgabemodul (A) zur Übergabe des Stapels (S) an eine Palettiereinheit,
- wobei die Module jeweils mit quer zu einer Transportrichtung (X, X') des Stapels (S) verlaufenden Seiten unmittelbar aneinander angrenzen,
**dadurch gekennzeichnet,**
**daß** alle Module reibungsarme und stationär angeordnete Auflage- und Transporttische (12, 112, 312) für einen Weitertransport des Stapels (S) aufweisen, und
**daß** für einen Transport des Stapels (S) von dem Entnahmemodul (E) zu dem Abgabemodul (A) an zumindest einem Modul ein Schieber (44; 374, 380) vorgesehen ist, der über die Außenabmessung des zugehörigen Modules hinaus in Transportrichtung (X) bewegbar ist, um den Stapel (S) vollständig auf ein benachbartes Modul zu schieben.

2. Handhabungssystem nach Anspruch 1,
**dadurch gekennzeichnet,**
**daß** an einem Modul ein in den Transportweg einfahrbarer Anschlag (160, 370) vorgesehen ist.

3. Handhabungssystem nach Anspruch 1 oder 2,
**dadurch gekennzeichnet,**
**daß** in das Entnahmemodul (E) eine Preßeinrichtung (38) integriert ist.

4. Handhabungssystem nach Anspruch 1, 2 oder 3,
**dadurch gekennzeichnet**,
die reibungsarmen Auflage- und Transporttische (12, 112, 312) mit Luftdüsen (18; 118; 318) versehen sind.

5. Handhabungssystem nach einem der vorstehenden Ansprüche,
**dadurch gekennzeichnet**,
zwischen Entnahmemodul (E) und Abgabemodul (A) zumindest ein Funktionsmodul, beispielsweise ein Umreifungsmodul (U) oder eine Eckumlenkung (EU), vorgesehen ist.

6. Entnahme- oder Abgabemodul für Stapel von Druckereierzeugnissen, insbesondere für ein Handhabungssystem nach zumindest einem der vorstehenden Ansprüche, mit
einem horizontal zwischen einer vorderen Endposition (35) und einer hinteren Endposition (37) bewegbaren Greifelement (22, 122) zur Entnahme eines Stapels (S) aus einer vorhergehenden Verarbeitungseinheit (K) oder zur Abgabe des Stapels an eine nachfolgende Verarbeitungseinheit, und
einer um eine horizontale Schwenkachse schwenkbar gelagerten Auflage (12, 112), die aus einer horizontalen Lage schräg nach unten kippbar ist.

7. Modul nach Anspruch 6,
**dadurch gekennzeichnet , daß**
das Greifelement (22, 122) gegeneinander anstellbare Greiffinger (24, 26; 124, 126) aufweist, wobei insbesondere ein unterer Teil des Greifelementes mindestens drei Greiffinger (126) aufweist.

8. Modul nach Anspruch 6 oder 7,
**dadurch gekennzeichnet, daß**
ein Teil (26, 126) des Greifelementes (22, 122) bei horizontal gestellter Auflage (12, 112) unterhalb der Oberseite der Auflage (12, 112) positioniert ist.

9. Modul nach Anspruch 6, 7 oder 8,
**dadurch gekennzeichnet, daß**
bei gekippter Auflage (26, 126) ein Teil des Greifelementes (22, 122) durch in der Auflage (12, 112) vorgesehene Aussparungen hindurchtritt.

10. Modul nach einem der Ansprüche 6 bis 9,
**dadurch gekennzeichnet, daß**
in dieses eine Preßeinrichtung (38) integriert ist, mit welcher ein Stapel (S) vertikal zusammenpressbar ist.

11. Modul nach einem der Ansprüche 6 bis 10,
**dadurch gekennzeichnet,**
**daß** zumindest ein Schieber (44) vorgesehen ist, der über die Außenabmessung des Modules hinaus horizontal bewegbar ist, um einen Stapel (S) auf ein nachfolgendes Modul zu schieben, wobei der Schieber (44) insbesondere auch vertikal bewegbar ist.

12. Modul nach einem der Ansprüche 6 bis 11,
**dadurch gekennzeichnet ,**
**daß** seitliche Führungen (54, 56; 154, 156) vorgesehen sind, um einen Stapel (S) innerhalb des Modules zu führen, wobei sich die Führungen (54) insbesondere über die Außenabmessung des Modules hinaus erstrecken.

13. Modul nach Anspruch 10 und 12,
**dadurch gekennzeichnet ,**
**daß** eine einzige Verstelleinrichtung (58) vorgesehen ist, um gleichzeitig die seitlichen Führungen (54, 56) und die Preßeinrichtung (38) auf das Format eines Stapels (S) einzustellen.

14. Modul nach einem der Ansprüche 6 bis 13,
**dadurch gekennzeichnet ,**
**daß** ein in den Transportweg des Stapels (S) einfahrbarer Anschlag (160) vorgesehen ist, der insbesondere vertikal und/oder horizontal verstellbar ist.

15. Modul nach einem der Ansprüche 6 bis 14,
**dadurch gekennzeichnet ,**
**daß** ein auf einen Stapel absenkbarer Niederhalter (164) vorgesehen ist, um den Stapel in seiner Position zu stabilisieren.

16. Funktionsmodul für Stapel von Druckereierzeugnissen, insbesondere für ein Handhabungssystem nach zumindest einem der vorstehenden Ansprüche 1 bis 6, mit
einer reibungsarmen Auflage (312) zum Transport eines Stapels (S) und zur Umlenkung desselben um 90°, und
einem Längsschieber (374) und einem Querschieber (380) zum Verschieben des Stapels auf der Auflage (312).

17. Modul nach Anspruch 16,
**dadurch gekennzeichnet,**
**daß** zumindest ein Schieber (374, 380) über die Außenabmessung des Modules (EU) hinaus horizontal bewegbar ist, um einen Stapel (S) auf ein nachfolgendes Modul (A) oder von einem vorhergehenden Modul (U) zu schieben, wobei der Schieber (374, 380) insbesondere auch vertikal bewegbar ist.

18. Modul nach einem der Ansprüche 16 oder 17,
**dadurch gekennzeichnet,**
**daß** seitliche Führungen (384 - 380) vorgesehen sind, um einen Stapel (S) innerhalb des Modules (EU) zu führen, wobei sich die Führungen insbesondere über die Außenabmessung des Modules hinaus erstrecken und/oder um 90° zueinander verlaufen.

19. Modul nach einem der Ansprüche 16 bis 18,
**dadurch gekennzeichnet ,**
**daß** zumindest zwei seitliche Führungen (385, 388) vorgesehen sind, die rechtwinklig aneinandergrenzen und die teleskopierbar ausgebildet sind, um eine Führung im Bereich einer Innenecke auch bei verschiedenen Formaten des Stapels (S) zu gewährleisten.

20. Modul nach Anspruch 19,
**dadurch gekennzeichnet ,**
**daß** eine einzige Verstelleinrichtung (390, 392) vorgesehen ist, um gleichzeitig in einer Transportrichtung (X, X') alle seitlichen Führungen auf das Format eines Stapels einzustellen.

21. Modul nach einem der Ansprüche 16 bis 20,
**dadurch gekennzeichnet ,**
**daß** ein in den Transportweg (X) des Stapels einfahrbarer Anschlag (370) vorgesehen ist, der insbesondere vertikal und/oder horizontal verstellbar ist.

22. Verfahren zum Fördern von insbesondere losen Stapeln von Druckereierzeugnissen, bei dem
a) ein Stapel von einem horizontal verschiebbaren Greifelement gegriffen und anschließend durch eine Rückzugsbewegung des Greifelementes auf eine aus einer horizontalen Lage schräg nach unten gekippte Auflage gezogen wird,
b) die Auflage anschließend in die Horizontale verschwenkt wird, und
c) der Stapel anschließend mit Hilfe eines Schiebers von der Auflage entgegengesetzt oder quer zur Entnahmerichtung heruntergeschoben wird.

23. Verfahren zum Fördern von insbesondere losen Stapeln von Druckereierzeugnissen, bei dem
a) ein Stapel mit Hilfe eines Schiebers auf eine horizontal angeordnete Auflage geschoben wird,
b) die Auflage anschließend aus der Horizontalen schräg nach unten verschwenkt wird, wodurch eine Übergabe des Stapels auf einen Teil eines Greifelementes erfolgt, und
c) der Stapel anschließend von dem Greifelement gegriffen und durch eine Vorwärtsbewegung des Greifelementes an eine nachfolgende Verarbeitungseinheit weitergereicht wird.
